# EUROPÄISCHE PATENTANMELDUNG

(11) **EP 3 699 860 A1**
(43) Veröffentlichungstag der Anmeldung: **26.08.2020**
(21) Anmeldenummer: 20158434.9
(22) Anmeldetag: 20.02.2020
(51) Int. Cl.: G06Q 30/06

(54) **VERFAHREN ZUM EINSTELLEN EINES ZU VERKAUFENDEN KRAFTFAHRZEUGS IN EINE KRAFTFAHRZEUG-DATENBANK UND VERFAHREN ZUR DYNAMISCHEN GENERIERUNG EINER SUCHMASKE ZUR ONLINE-KRAFTFAHRZEUGSUCHE**

(30) Priorität: 22.02.2019 DE 102019104606
(71) Anmelder: Fink, Oliver, 54295 Trier (DE); Lodes, Matthias, 91077 Hetzies (DE)
(72) Erfinder: FINK, Oliver, 54295 Trier (DE); LODES, Matthias, 91077 Hetzles (DE); SCHELLENBERG, Oliver, 54292 Trier (DE); SCHNEIDER, Benjamin, 84028 Landshut (DE)
(74) Vertreter: Herrmann, Jochen

(57) **Zusammenfassung**

Die Erfindung betrifft ein Verfahren zum Einstellen eines zu verkaufenden Kraftfahrzeugs in eine Kraftfahrzeug-Datenbank (4) mittels eines an ein Wide-Area-Netzwerk (6), nachfolgend WAN, angebundenen Servers (2), auf dem das Verfahren ausgeführt wird. Ferner betrifft die Erfindung ein Verfahren zur dynamischen Generierung einer Suchmaske zur Online-Kraftfahrzeugsuche mittels eines an ein WAN (6) angebundenen Clients (18), wobei das Verfahren auf einem an das WAN (6) angebundenen Server (2) ausgeführt wird.

## Beschreibung

Die vorliegende Erfindung betrifft ein Verfahren zum Einstellen eines zu verkaufenden Kraftfahrzeugs in eine Kraftfahrzeug-Datenbank mittels eines an ein Wide-Area-Netzwerk (WAN) angebundenen Servers, auf dem das Verfahren ausgeführt wird. Des Weiteren umfasst die Erfindung ein Verfahren zur dynamischen Generierung einer Suchmaske zur Online-Kraftfahrzeugsuche mittels eines an ein Wide-Area-Netzwerk (WAN) angebundenen Clients, wobei das Verfahren auf einem an das WAN angebundenen Server ausgeführt wird.

Aus dem Stand der Technik sind an ein Wide-Area-Netzwerk (WAN) angebundene Server bekannt, auf denen eine Kraftfahrzeug-Datenbank abgelegt ist. Die Server werden dabei üblicherweise von Online-Kraftfahrzeughändlern (z.B. mobile.de, autoscout24.de, neuwagen24.de u.a.) betrieben, die es sich zur Aufgabe gemacht haben, Kaufinteressenten über das Internet Neu- und Gebrauchtfahrzeuge anzubieten. Die Kaufinteressenten können mittels eines an das Wide-Area-Netzwerk (WAN) angebundenen Clients auf die Datenbank zugreifen. Die Suche nach geeigneten Fahrzeugen erfolgt in der Regel über eine Suchmaske, die von dem Service-Anbieter zum Durchsuchen der Kraftfahrzeug-Datenbank zur Verfügung gestellt und auf einem Bildschirm des Clients dargestellt wird. Die Suchmasken sind in der Regel statisch vorgegeben und bieten eine beschränkte Auswahl an zu recherchierenden bzw. zu suchenden Kriterien der Kraftfahrzeuge.

Die bekannten Kraftfahrzeug-Datenbanken umfassen eine Vielzahl von Kraftfahrzeugen, in der Regel einschließlich Informationen über deren Jahrgang, Kilometerleistung, Farbe der Karosserie, Material und Farbe der Innenausstattung, Motorisierung und Ausstattung. Dabei ist der Inhalt der Datenbank abhängig von den Informationen, die der Verkäufer des Kraftfahrzeugs macht, bzw. von den Informationen, die auf Grundlage der Informationen des Verkäufers händisch in die Datenbank eingegeben werden. Die Vollständigkeit und Richtigkeit der Informationen hängt von dem Verkäufer des Kraftfahrzeugs ab. Außerdem werden allenfalls in einem in der Datenbank zu den verschiedenen Kraftfahrzeugen abgelegten nicht recherchierbaren Fließtext die herstellerseitigen Bezeichnungen für die verschiedenen Informationen verwendet. So sind bspw. eher Gattungsangaben wie "Abstandstempomat" oder "Volllederausstattung" als die Herstellerbezeichnungen "Distronic" oder "Disegno" in der Datenbank in recherchierbarer Weise abgelegt.

Beim Stand der Technik hängt die Vollständigkeit und Richtigkeit der in der Datenbank abgelegten Informationen zu den verschiedenen Fahrzeugen also von dem Verkäufer bzw. der Person ab, welche die Informationen in die Datenbank eingibt. Ferner ist auf Seiten eines Kaufinteressenten eine Recherche in der Datenbank nach der Herstellerbezeichnung bestimmter Ausstattungen bestimmter Fahrzeuge nicht möglich, da die Herstellerbezeichnungen entweder nicht oder nur in nicht recherchierbarer Form in der Datenbank enthalten sind.

Ausgehend von dem beschriebenen Stand der Technik liegt der vorliegenden Erfindung deshalb die Aufgabe zugrunde, die genannten Nachteile zu überwinden.

Insbesondere soll die Online-Suche nach Kraftfahrzeugen in Kraftfahrzeug-Datenbanken zuverlässiger, einfacher und komfortabler werden.

Zur Lösung dieser Aufgabe wird ein Verfahren zum Einstellen eines zu verkaufenden Kraftfahrzeugs in eine Kraftfahrzeug-Datenbank mittels eines an ein Wide-Area-Netzwerk (WAN) angebundenen Servers mit den Merkmalen des Anspruchs 1 vorgeschlagen. Das Verfahren gemäß dem Oberbegriff des Anspruchs 1 umfasst die folgenden Verfahrensschritte:
Empfangen von Informationen über das WAN betreffend das zu verkaufende Kraftfahrzeug bspw. von einem Verkäufer des Kraftfahrzeugs, die Informationen umfassend mindestens eine Fahrzeug-Identifizierungsnummer (Vehicle Identification Number: VIN) des Kraftfahrzeugs,
Extrahieren der VIN des Kraftfahrzeugs aus den empfangenen Kraftfahrzeug-Informationen und Ermitteln des Herstellers des Kraftfahrzeugs anhand der VIN,
zumindest mittelbares Zugreifen über das WAN auf eine an das WAN angeschlossene dezentrale Hersteller-Datenbank des Kraftfahrzeugherstellers, in der Daten über Kraftfahrzeuge des Herstellers abgelegt sind, die Daten umfassend für jedes Kraftfahrzeug die VIN und eine bei Auslieferung des Kraftfahrzeugs werksseitig vorhandene Ausstattung des Kraftfahrzeugs, und Übermitteln der VIN des Kraftfahrzeugs an die Hersteller-Datenbank,
Empfangen von Daten aus der Hersteller-Datenbank für das Kraftfahrzeug, dessen VIN an die Hersteller-Datenbank übermittelt wurde, die Daten umfassend zumindest die bei Auslieferung des Kraftfahrzeugs werksseitig vorhandene Ausstattung des Kraftfahrzeugs,
Kombinieren der zuvor empfangenen Kraftfahrzeug-Informationen (Informationen betreffend das zu verkaufende Kraftfahrzeug) und die empfangenen Daten aus der Hersteller-Datenbank für das zu verkaufende Kraftfahrzeug,
Abspeichern der kombinierten Informationen und Daten in der Kraftfahrzeug-Datenbank für das zu verkaufende Kraftfahrzeug.

Des Weiteren wird ein Verfahren zur dynamischen Generierung einer Suchmaske zur Online-Kraftfahrzeugsuche mittels eines an ein Wide-Area-Netzwerk (WAN) angebundenen Clients mit den Merkmalen des Anspruchs 8 vorgeschlagen. Das Verfahren gemäß dem Oberbegriff des Anspruchs 8 umfasst die folgenden Verfahrensschritte:
Empfangen einer Suchanfrage nach einem gesuchten Kraftfahrzeug von dem Client über das WAN, die Suchanfrage umfassend mindestens einen Herstellernamen und einen Modellnamen des gesuchten Kraftfahrzeugs,
Zugreifen auf eine Kraftfahrzeug-Datenbank, in der eine Kombination von Informationen umfassend mindestens eine Fahrzeug-Identifizierungsnummer (VIN), Herstellernamen und Modellnamen von Kraftfahrzeugen und von Daten umfassend eine bei Auslieferung der Kraftfahrzeuge werksseitig vorhandene Ausstattung der Kraftfahrzeuge und bei Auslieferung des Kraftfahrzeugs theoretisch maximal mögliche fahrzeugspezifische Ausstattung der Kraftfahrzeuge abgespeichert sind,
Ermitteln von Kraftfahrzeugen aus der Kraftfahrzeug-Datenbank, welche der Suchanfrage entsprechen,
Generieren der Suchmaske auf Grundlage der kombinierten Informationen und Daten für die ermittelten Kraftfahrzeuge aus der Kraftfahrzeug-Datenbank sowie anhand der bei Auslieferung der ermittelten Kraftfahrzeuge theoretisch maximal möglichen fahrzeugspezifischen Ausstattung der ermittelten Kraftfahrzeuge, und
Übermitteln der generierten Suchmaske an den Client über das WAN für weitere Filteroptionen durch einen Nutzer des Clients.

Ein wesentlicher Aspekt der Erfindung ist darin zu sehen, dass auf eine Hersteller-Datenbank des Kraftfahrzeugherstellers zugegriffen wird und aus dieser anhand der VIN des in die Kraftfahrzeug-Datenbank einzustellenden Kraftfahrzeugs die bei Auslieferung des Kraftfahrzeugs werksseitig vorhandene Ausstattung des Kraftfahrzeugs ermittelt und in der Kraftfahrzeug-Datenbank in recherchierbarer Weise abgelegt wird. Auf diese Weise ist sichergestellt, dass für jedes eingestellte Kraftfahrzeug die Ausstattung richtig und vollständig in der Kraftfahrzeug-Datenbank abgelegt wird. Auch im Rahmen der Online-Kraftfahrzeugsuche wird auf die Hersteller-Datenbank des Kraftfahrzeugherstellers zugegriffen. Nach Eingabe des Herstellernamens und des Modellnamens des gesuchten Kraftfahrzeugs durch einen Nutzer des Clients wird anhand dieser Informationen die bei Auslieferung der Kraftfahrzeuge dieses Herstellers und Modells werksseitig vorhandene Ausstattung und die bei Auslieferung des Kraftfahrzeugs theoretisch maximal mögliche fahrzeugspezifische Ausstattung der Kraftfahrzeuge abgerufen. Eine Suchmaske zur Online-Kraftfahrzeugsuche, die dem Nutzer auf einem Bildschirm des Client angezeigt wird, wird anhand der abgerufenen Informationen dynamisch generiert. Der Nutzer erhält so über die Suchmaske eine Angabe über die bei Auslieferung der Kraftfahrzeuge des gesuchten Herstellers und Modells die theoretisch maximal mögliche Sonderausstattung und fakultativ auch über die damals werkseitig vorhandene Serienausstattung. Der Nutzer kann nun anhand der Suchmaske eine Auswahl treffen, welche Ausstattung das von ihm gesuchte Kraftfahrzeug haben soll. Auf diese Weise wird eine Suche nach für die Kraftfahrzeuge des gesuchten Herstellers und Modells nicht lieferbarer Ausstattung vermieden. Außerdem erhält der Nutzer konkrete Informationen, welche Serienausstattung vorhanden ist und welche Sonderausstattung optional erhältlich war, um seine Suchanfrage entsprechend zu optimieren. Wenn der Nutzer anhand der Suchmaske bspw. erkennt, dass für das gesuchte Fahrzeug damals schon ein Spurhalteassistent ("lane assist") als Sonderausstattung lieferbar war, könnte er seine Suchanfrage dahingehend einschränken, dass das gesuchte Kraftfahrzeug auch dieses Ausstattungsdetail haben soll.

Die für die Online-Kraftfahrzeugsuche erforderlichen Informationen aus der Hersteller-Datenbank müssen nicht zwangsläufig für jede einzelne Kraftfahrzeugsuche unmittelbar aus der Hersteller-Datenbank ausgelesen werden. Vielmehr wäre es denkbar, die erforderlichen Informationen aus der Hersteller-Datenbank vorab herunterzuladen und ebenfalls in der Kraftfahrzeug-Datenbank abzuspeichern. Für die Kraftfahrzeugsuche kann dann mittelbar auf die in der Kraftfahrzeug-Datenbank abgespeicherten Informationen aus der Hersteller-Datenbank zugegriffen werden.

In einer Weiterbildung des Verfahrens zum Einstellen eines zu verkaufenden Kraftfahrzeugs in eine Kraftfahrzeug-Datenbank wird gemäß einer vorteilhaften Weiterbildung der Erfindung vorgeschlagen, dass die Kraftfahrzeug-Informationen betreffend das zu verkaufende Kraftfahrzeug von einem an das WAN angeschlossenen Server eines Online-Kraftfahrzeughändlers empfangen werden. Der an das Wide-Area-Netzwerk (WAN) angebundene Händler-Server kann die Kraftfahrzeug-Informationen somit entweder an den Server des Service-Anbieters weiterleiten, bspw. über das WAN, oder der Server des Service-Anbieters ist ein Server eines Online-Kraftfahrzeughändlers. Das WAN ist vorzugsweise das Internet.

Gemäß einer bevorzugten Ausführungsform der Erfindung wird vorgeschlagen, dass der Zugriff von dem an das WAN angeschlossenen Server auf die Hersteller-Datenbank mittelbar über einen an das WAN angeschlossenen Server eines Anbieters zur Fahrzeugbewertung erfolgt, der Zugriff auf die Hersteller-Datenbank hat. Vorzugsweise erfolgt der Zugriff auf die Hersteller-Datenbank mittelbar über einen an das WAN angeschlossenen Schwacke®-Server. Selbstverständlich kann der Zugriff auch über Server von anderen Anbietern zur Fahrzeugbewertung erfolgen. Alternativ wird vorgeschlagen, dass der Zugriff von dem an das WAN angeschlossenen Server auf die Hersteller-Datenbank mittelbar über einen an das WAN angeschlossenen Server eines Herstellers des zu verkaufenden Kraftfahrzeugs erfolgt, der Zugriff auf die Hersteller-Datenbank hat.

Gemäß einer vorteilhaften Weiterbildung der Erfindung wird vorgeschlagen, dass die empfangenen Daten aus der Hersteller-Datenbank für das Kraftfahrzeug, dessen VIN an die Hersteller-Datenbank übermittelt wurde, eine bei Auslieferung des Kraftfahrzeugs theoretisch maximal mögliche fahrzeugspezifische Ausstattung des Kraftfahrzeugs umfassen. Ein Abgleich der werkseitig maximal möglichen Ausstattung mit der tatsächlichen Ausstattung des eingestellten Kraftfahrzeugs lässt einfach und übersichtlich erkennen, ob das eingestellte Kraftfahrzeug als eher gut ausgestattet oder eher nicht bezeichnet werden kann. Zudem kann auf diese Weise eine vollständige und korrekte Liste aller tatsächlichen und theoretisch möglichen Ausstattungsoptionen des Kraftfahrzeugs erzeugt und in der Kraftfahrzeug-Datenbank abgelegt werden.

Gemäß einer besonders bevorzugten Ausführungsform der vorliegenden Erfindung wird vorgeschlagen, dass die bei Auslieferung des Kraftfahrzeugs werksseitig vorhandene Ausstattung des Kraftfahrzeugs und/oder - sofern verfügbar - die bei Auslieferung des Kraftfahrzeugs theoretisch maximal mögliche fahrzeugspezifische Ausstattung des Kraftfahrzeugs anhand von herstellerseitig vorgegebenen Bezeichnungen und/oder Ausstattungscodes der Ausstattung in der Kraftfahrzeug-Datenbank abgespeichert wird. Am Beispiel von Mercedes®-Fahrzeugen sind dies bspw.

| **Code** | **Bezeichnung** |
|---|---|
| 220 | Parktronic |
| 220A | Leder zweifarbig (geprägt) |
| 221 | Fahrersitz links elektrisch verstellbar |
| 221A | Leder schwarz |
| 222 | Fahrersitz rechts elektrisch verstellbar |
| 222A | Leder zweifarbig (blau) |
| 223 | Fondlehnenverstellung und Kopfstützen elektrisch |
| 224 | Fondeinzelsitze und Kopfstützen el. verstellbar |
| 225 | Einzelsitz Fondmitte Kopfstütze elektr. verstellbar |

Das Ablegen von herstellerseitig vorgegebenen Codes und/oder Bezeichnungen der Ausstattungsdetails in recherchierbarer Form in der Kraftfahrzeug-Datenbank gibt den Interessenten die Möglichkeit, anhand der Codes und/oder Bezeichnungen gezielt nach Fahrzeugen eines bestimmten Herstellers mit bestimmten Ausstattungsdetails zu suchen. So kann bspw. nicht nach automatische Einparkhilfe, sondern nach dem Code "220" oder der Bezeichnung "Parktronic" recherchiert werden.

In einer Weiterbildung des Verfahrens zur dynamischen Generierung einer Suchmaske zur Online-Kraftfahrzeugsuche mittels eines an ein Wide-Area-Netzwerk (WAN) angebundenen Clients wird vorgeschlagen, dass der Zugriff von dem Client auf die Kraftfahrzeug-Datenbank mittelbar über den Server erfolgt. Die gesamte Datenübertragung zwischen Client und Kraftfahrzeug-Datenbank, d.h. die Anfrage des Clients mit Informationen über Hersteller und Modell des gesuchten Kraftfahrzeugs, und die Antwort mit den Daten der bei Auslieferung des Kraftfahrzeugs werksseitig vorhandenen Ausstattung und der bei Auslieferung des Kraftfahrzeugs maximal möglichen fahrzeugspezifischen Sonderausstattung des gesuchten Kraftfahrzeugs, erfolgt somit über den Server.

Weitere Merkmale und Vorteile der Erfindung werden nachfolgend anhand der einzigen Figur näher erläutert. Es zeigt:

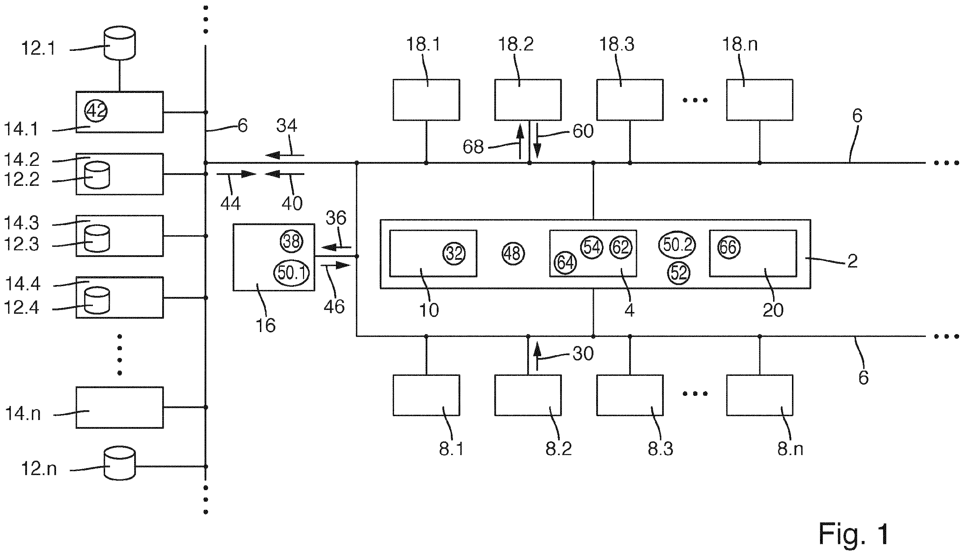

- Fig. 1: eine schematische Ansicht einer Netzwerkstruktur zur Veranschaulichung des Funktionsprinzips der vorliegenden Erfindung.

Die vorliegende Erfindung betrifft ein Verfahren zum Einstellen eines zu verkaufenden Kraftfahrzeugs in eine Kraftfahrzeug-Datenbank mittels eines an ein Wide-Area-Netzwerk (WAN) angebundenen Servers, auf dem das Verfahren ausgeführt wird. In der Figur ist der Server eines Client-Server-Netzwerks mit dem Bezugszeichen 2 bezeichnet. Dabei handelt es sich vorzugsweise um einen Server 2 eines Service-Anbieters, wie beispielsweise clevercar®. In der Figur ist die Kraftfahrzeug-Datenbank als Teil des clevercar®-Servers 2 gezeigt und mit dem Bezugszeichen 4 bezeichnet. Selbstverständlich kann die Datenbank 4 auch außerhalb des Servers 2 als externe Datenbank angeordnet sein, auf die der Server 2 über ein WAN zugreifen kann. Das WAN ist beispielsweise als das Internet ausgebildet und in seiner Gesamtheit mit dem Bezugszeichen 6 bezeichnet. Über das WAN 6 sind die Clients und Server des Client-Server-Netzwerks aus der Figur miteinander verbunden, sodass sie über das WAN 6 untereinander Daten austauschen können. Der Datenaustausch erfolgt dabei vorzugsweise nach dem sogenannten Internet-Protokoll (IP). Das zu verkaufende Kraftfahrzeug kann ein Neuwagen oder ein Gebrauchtwagen sein. Bei dem Kraftfahrzeug kann es sich um ein Auto, ein Motorrad, einen Lastkraftwagen, einen Omnibus oder ein beliebiges Nutzfahrzeug handeln.

Das Verfahren zum Einstellen eines zu verkaufenden Kraftfahrzeugs in eine Kraftfahrzeug-Datenbank umfasst die folgenden Verfahrensschritte:
Der clevercar®-Server 2 empfängt in einem Schritt 30 von einem Verkäufer Informationen über das WAN 6 betreffend ein zu verkaufendes Kraftfahrzeug, wobei die Informationen mindestens eine Fahrzeug-Identifizierungsnummer (VIN) des Kraftfahrzeugs umfassen. Die Informationen werden vorzugsweise von Händlern (z.B. Online-Kraftfahrzeughändlern) bzw. deren Servern 8 übermittelt. In der Figur sind beispielhaft vier Händlerserver 8.1, 8.2, 8.3 und 8.n gezeigt. Selbstverständlich können auch mehr oder weniger als die gezeigten vier Händlerserver 8 vorgesehen sein. Die Händlerserver 8 sind über das WAN 6 mit dem Service-Anbieter-Server 2 verbunden. In dem gezeigten Beispiel wird die Anfrage 30 von dem Server 8.2 an den Server 2 übermittelt. Alternativ wäre es auch denkbar, dass die Rechner der Verkäufer nicht als Server, sondern als Client ausgebildet sind. In diesem Sinne kann auf den Rechnern der Verkäufer ein geeignetes Computerprogramm (z.B. eine sog. Börsen-Upload-Software oder eine Dealer Management System (DMS)-Software) ablaufen, mit dessen Hilfe die Kraftfahrzeug-Informationen an den clevercar®-Server 2 über das WAN 6 übermittelt werden.

Dann wird in einem Schritt 32 in dem clevercar®-Server 2 die VIN des zu verkaufenden Kraftfahrzeugs aus den empfangenen Kraftfahrzeug-Informationen extrahiert und der Hersteller des Kraftfahrzeugs anhand der VIN ermittelt. Zu diesem Zweck ist in den Server 2 eine entsprechende Funktionseinheit 10 vorgesehen, die hier als ein "VIN Caller" bezeichnet ist.

Anschließend wird in einem Schritt 34 mittels des clevercar®-Servers 2 zumindest mittelbar über das WAN 6 auf eine an das WAN angeschlossene dezentrale Hersteller-Datenbank 12 des Herstellers des zu verkaufenden Kraftfahrzeugs zugegriffen, in der Daten über Kraftfahrzeuge des Herstellers abgelegt sind. In dem in der Figur gezeigten Ausführungsbeispiel sind insgesamt fünf Hersteller-Datenbanken 12.1, 12.2, 12.3, 12.4 und 12.n gezeigt. Selbstverständlich können auch mehr oder weniger als die fünf gezeigten Hersteller-Datenbanken 12 vorgesehen sein. Die Hersteller-Datenbanken 12.2, 12.3 und 12.4 sind beispielsweise integraler Bestandteil von Kraftfahrzeughersteller-Servern 14.2, 14.3 und 14.4. Die Hersteller-Server 14 stehen über ein Netzwerk, beispielsweise das WAN 6, mit dem clevercar®-Server 2 in Verbindung. In dem gezeigten Beispiel stehen die Hersteller-Server 14 mittelbar über einen Server 16 eines Anbieters zur Fahrzeugbewertung, bspw. einen Schwacke®-Server, mit dem Server 2 in Verbindung. Selbstverständlich wäre es jedoch auch denkbar, dass der clevercar®-Server 2 über das WAN 6 direkt Zugriff auf die Hersteller-Server 14 hat. Die Hersteller-Datenbanken 12.1 und 12.n sind dagegen beispielhaft als externe Datenbanken 12 gezeigt, wobei die Datenbank 12.1 direkt an einen Hersteller-Server 14.1 angeschlossen ist, beispielsweise über eine USB- oder eine Thunderbolt-Schnittstelle, und die Datenbank 12.n an ein Netzwerk, beispielsweise das WAN 6, angeschlossen ist, über das ein Hersteller-Server 14.n Zugriff auf die Datenbank 12.n hat. In dem gezeigten Beispiel wird im Rahmen des Zugriffs auf die Datenbank 12 zunächst eine Anfrage 36 an den Schwacke®-Server 16 gesandt.

Die in der Hersteller-Datenbank 12 abgelegten Daten umfassen für jedes Kraftfahrzeug die VIN und eine bei Auslieferung des Kraftfahrzeugs werksseitig vorhandene Ausstattung des Kraftfahrzeugs. Die werksseitige Ausstattung des Kraftfahrzeugs kann sowohl die serienmäßig vorhandene Serienausstattung als auch die seinerzeit bei Auslieferung des Kraftfahrzeugs bestellte (kostenpflichtige) Sonderausstattung umfassen. Zum Zugriff auf die richtige Hersteller-Datenbank 12 kann der Hersteller des Kraftfahrzeugs bzw. der entsprechenden Hersteller-Datenbank 12 anhand der VIN ermittelt werden. Dies kann ebenfalls in dem VIN Caller 10 des clevercar®-Servers 2 realisiert werden. Vorzugsweise erfolgt der Zugriff auf die Hersteller-Datenbanken 12 mittels der Anfrage 36 des clevercar®-Servers 2, welche zumindest die VIN des zu verkaufenden Kraftfahrzeugs beinhaltet, an den Schwacke®-Server 16, der seinerseits in einem Schritt 38 den entsprechenden Hersteller hinter einer jeden VIN erkennt.

Nun stellte der Schwacke®-Server 16 dann über das WAN 6 eine Anfrage 40, welche zumindest die VIN des zu verkaufenden Kraftfahrzeugs beinhaltet, an den entsprechenden Hersteller-Server 14, in dem gezeigten Beispiel an den Hersteller-Server 14.1. Der Hersteller-Server 14.1 lädt in einem Schritt 42 die Herstellungsdaten zu der VIN aus der entsprechenden Hersteller-Datenbank 12.1 und sendet diese in einem Schritt 44 über das Netzwerk 6 an den Schwacke®-Server 16. Dieser sendet die empfangenen Daten (inklusive der modellspezifischen Ausstattung) in einem Schritt 46 an den clevercar®-Server 2. Alternativ können die Herstellungsdaten von der Hersteller-Datenbank 12.1 über das Netzwerk 6 auch direkt an den clevercar®-Server 2 übermittelt werden. Dieser empfängt die Daten in einem Schritt 48 aus der Hersteller-Datenbank 12 für das zu verkaufende Kraftfahrzeug, dessen VIN mit der Anfrage 40 zuvor an die Hersteller-Datenbank 12 übermittelt wurde. Die empfangenen Daten umfassen zumindest die bei Auslieferung des Kraftfahrzeugs werksseitig vorhandene Ausstattung des Kraftfahrzeugs (Serienausstattung und Sonderausstattung). Es ist denkbar, dass der Schwacke®-Server 16 in einem Schritt 50.1 die von den verschiedenen Hersteller-Servern 14 empfangenen Daten in eine einheitliche strukturierte Form bringt. Alternativ kann auch der clevercar®-Server 2 die von den verschiedenen Herstellern empfangenen Daten in einem Schritt 50.2 in eine einheitliche strukturierte Form bringen.

Schließlich werden durch den clevercar®-Server 2 in einem Schritt 52 die in dem Schritt 30 über den Händler Server 8 empfangenen Kraftfahrzeug-Informationen und die in dem Schritt 46 aus der Hersteller-Datenbank 12 empfangenen Daten für das zu verkaufende Kraftfahrzeug kombiniert und in einem Schritt 54 die kombinierten Informationen und Daten für das zu verkaufende Kraftfahrzeug in der Kraftfahrzeug-Datenbank 4 abgespeichert.

Der Zugriff auf die Hersteller-Datenbank 12 erlaubt es, einfach und schnell zuverlässige, korrekte und vollständige Daten über jedes zu verkaufende Kraftfahrzeug in der Kraftfahrzeug-Datenbank 4 abzulegen und einem Kaufinteressenten somit das Auffinden von gesuchten Kraftfahrzeugen aus der Datenbank 4 zu erleichtern und zuverlässiger zu gestalten. Außerdem wird dadurch ermöglicht, herstellerseitig vergebene Codes und/oder Bezeichnungen für die verschiedenen Ausstattungsoptionen in der Datenbank 4 in für einen Kaufinteressenten recherchierbarer Weise abzulegen.

Des Weiteren umfasst die Erfindung ein Verfahren zur dynamischen Generierung einer Suchmaske zur Online-Kraftfahrzeugsuche mittels eines an ein Wide-Area-Netzwerk (WAN) 6 angebundenen Clients 18, wobei das Verfahren auf dem an das WAN 6 angebundenen Server 2 (z.B. clevercar®-Server) ausgeführt wird. Dabei wird die Suchmaske auf einer Website 20 des Servers 2 dargestellt. In dem in der Figur gezeigten Beispiel sind insgesamt vier Clients 18.1, 18.2, 18.3 und 18.n dargestellt. Die Clients stehen über ein Netzwerk, beispielsweise das WAN 6, mit dem clevercar®-Server 2 in Verbindung. Selbstverständlich können auch mehr oder weniger als die dargestellten vier Clients 18 über das Netzwerk 6 mit dem Server 2 in Verbindung stehen. Ein Interessent, der ein Kraftfahrzeug kaufen möchte, kann über seinen Client 18 verschiedene Suchkriterien für das gesuchte Kraftfahrzeug in die Suchmaske eingeben. Die eingegebenen Suchkriterien werden mit dem Inhalt der Kraftfahrzeug-Datenbank 4 verglichen und dem Interessenten geeignete Kraftfahrzeuge angeboten, bei denen möglichst viele Suchkriterien erfüllt sind. Die angebotenen Kraftfahrzeuge können den Interessenten über einen Bildschirm des Client 18 in Form einer Liste oder in einer detaillierten Einzelansicht ausgegeben werden.

Das Verfahren zur dynamischen Generierung der Suchmaske zur Online-Kraftfahrzeugsuche umfasst die folgenden Verfahrensschritte:
Der clevercar®-Server 2 empfängt in einem Schritt 60 eine Suchanfrage nach einem gesuchten Kraftfahrzeug von einem Client 18 über das WAN 6, wobei die Suchanfrage mindestens einen Herstellernamen (z.B. Mercedes; Opel) und einen Modellnamen (z.B. C-Klasse; Astra) des gesuchten Kraftfahrzeugs umfasst. In dem Beispiel sendet ein Kaufinteressent über den Client 18.2 die Suchanfrage 60 an den Server 2. Die Suchanfrage 60 wird vorzugsweise von dem Kaufinteressenten über die Website 20 eingegeben, die von dem clevercar®-Server 2 zur Verfügung gestellt und auf einem Bildschirm des Clients 18 dargestellt wird. Zu diesem Zweck kann auf der Website 20 eine Standard-Suchmaske erzeugt und ausgegeben werden, über welche die Suchanfrage 60 eingegeben werden kann. Diese Standard-Suchmaske wird im weiteren Verfahren dynamisch variiert, angepasst und optimiert, um die Kraftfahrzeugsuche für den Kaufinteressenten zuverlässiger, einfacher und komfortabler zu gestalten.

Anschließend greift der clevercar®-Server 2 in einem Schritt 62 auf die Kraftfahrzeug-Datenbank 4 zu und ermittelt alle verfügbaren Kraftfahrzeuge, die der Suchanfrage, insbesondere den in der Suchmaske eingegebenen Herstellernamen und Modellnamen, entsprechen. Ferner werden in einem Schritt 64 aus der Kraftfahrzeug-Datenbank 4 Daten ausgelesen, die eine bei Auslieferung der verfügbaren Kraftfahrzeuge theoretisch maximal mögliche Sonderausstattung der Kraftfahrzeuge und fakultativ auch eine werksseitig vorhandene fahrzeugspezifische Serienausstattung der Kraftfahrzeuge umfassen. Dabei wird also vorzugsweise nicht unmittelbar auf die Hersteller-Datenbank 12, sondern mittelbar auf die in der Kraftfahrzeug-Datenbank 4 abgespeicherten Informationen aus der Hersteller-Datenbank 12 zugegriffen.

Anschließend wird - immer noch in dem clevercar®-Server 2 - in einem Schritt 66 die Suchmaske auf Grundlage der kombinierten Informationen und Daten für die verfügbaren Kraftfahrzeuge aus der Kraftfahrzeug-Datenbank 4 sowie anhand der bei Auslieferung der ermittelten Kraftfahrzeuge theoretisch maximal möglichen fahrzeugspezifischen Ausstattung der verfügbaren Kraftfahrzeuge generiert bzw. optimiert. In diesem Zusammenhang wird beispielsweise vorgeschlagen, dass in der Suchmaske abhängig von der seinerzeit theoretisch maximal möglichen fahrzeugspezifischen Ausstattung des gesuchten Kraftfahrzeugs (je nach Hersteller und Modell) zusätzliche Ausstattungsoptionen aufgeführt sind, die von dem Kaufinteressenten über die Suchmaske durch einfaches Anklicken ausgewählt oder abgewählt werden können. Die Ausstattungsoptionen können dabei entweder mit generischen Begriffen (z.B. "Abstandsregeltempomat") oder mit herstellerseitig vorgegebenen Begriffen (z.B. "Distronic") oder Ausstattungscodes (z.B. "219") beschrieben sein. Auf diese Weise wird sichergestellt, dass die Suchmaske keine Ausstattungsoptionen enthält, die für das gesuchte Kraftfahrzeug nicht verfügbar sind, und dass die Suchmaske eine vollständige und richtige Liste aller seinerzeit theoretisch verfügbaren Ausstattungsoptionen enthält.

Schließlich wird in einem Schritt 68 die dynamisch generierte Suchmaske an den Client 18 des Kaufinteressenten, der die Suchanfrage nach einem bestimmten Kraftfahrzeug abgesandt hat, über das WAN 6 für weitere Filteroptionen durch den Kaufinteressenten übermittelt. Der Interessent kann die weiteren Filteroptionen durch Anwahl oder Abwahl der auf der Suchmaske angezeigten Ausstattungsoptionen des gesuchten Kraftfahrzeugs ausführen.

In einer Weiterbildung des Verfahrens zur dynamischen Generierung einer Suchmaske zur Online-Kraftfahrzeugsuche mittels eines an ein Wide-Area-Netzwerk (WAN) angebundenen Clients 18 wird vorgeschlagen, dass der Zugriff von dem Client 18 auf die Kraftfahrzeug-Datenbank 4 mittelbar über den Server 2 erfolgt. In diesem Fall wäre die Datenbank 4 also außerhalb des Servers 2 als externe Datenbank ausgebildet, über die der Server 2 bspw. über das WAN 6 Zugriff hat. Die gesamte Datenübertragung zwischen Client 18 und Kraftfahrzeug-Datenbank 4, d.h. die Suchanfrage 60 des Clients mit Informationen über Hersteller und Modell des gesuchten Kraftfahrzeugs, und die Antwort 68 mit den Daten der bei Auslieferung des Kraftfahrzeugs werksseitig vorhandenen Ausstattung und der bei Auslieferung des Kraftfahrzeugs maximal möglichen fahrzeugspezifischen Sonderausstattung des gesuchten Kraftfahrzeugs, erfolgt somit über den Server 2.

## Patentansprüche

1. Verfahren zum Einstellen eines zu verkaufenden Kraftfahrzeugs in eine Kraftfahrzeug-Datenbank (4) mittels eines an ein Wide-Area-Netzwerk (6), nachfolgend WAN, angebundenen Servers (2), auf dem das Verfahren ausgeführt wird, mit folgenden Verfahrensschritten:
Empfangen (30) von Kraftfahrzeug-Informationen über das WAN (6) betreffend das zu verkaufende Kraftfahrzeug, die Kraftfahrzeug-Informationen umfassend mindestens eine Fahrzeug-Identifizierungsnummer, nachfolgend VIN, des Kraftfahrzeugs,
Extrahieren (32) der VIN des Kraftfahrzeugs aus den empfangenen Kraftfahrzeug-Informationen und Ermitteln des Herstellers des Kraftfahrzeugs anhand der VIN,
zumindest mittelbares Zugreifen (36, 40) über das WAN (6) auf eine an das WAN (6) angeschlossene dezentrale Hersteller-Datenbank (12) des Kraftfahrzeugherstellers, in der Daten über Kraftfahrzeuge des Herstellers abgelegt sind, die Daten umfassend für jedes Kraftfahrzeug die VIN und eine bei Auslieferung des Kraftfahrzeugs werksseitig vorhandene Ausstattung des Kraftfahrzeugs, und Übermitteln der VIN des Kraftfahrzeugs an die Hersteller-Datenbank (12),
Empfangen (42, 44, 46) von Daten aus der Hersteller-Datenbank (12) für das Kraftfahrzeug, dessen VIN an die Hersteller-Datenbank (12) übermittelt wurde, die Daten umfassend zumindest die bei Auslieferung des Kraftfahrzeugs werksseitig vorhandene Ausstattung des Kraftfahrzeugs,
Kombinieren (52) der empfangenen Kraftfahrzeug-Informationen und die empfangenen Daten aus der Hersteller-Datenbank (12) für das zu verkaufende Kraftfahrzeug,
Abspeichern (54) der kombinierten Informationen und Daten in der Kraftfahrzeug-Datenbank (4) für das zu verkaufende Kraftfahrzeug.

2. Verfahren nach Anspruch 1, **dadurch gekennzeichnet, dass** die Kraftfahrzeug-Informationen betreffend das zu verkaufende Kraftfahrzeug von einem an das WAN (6) angeschlossenen Server (8) eines Online-Kraftfahrzeughändlers empfangen werden.

3. Verfahren nach Anspruch 1 oder 2, **dadurch gekennzeichnet, dass** der Zugriff auf die Hersteller-Datenbank (12) mittelbar über einen an das WAN (6) angeschlossenen Server (16) eines Anbieters zur Fahrzeugbewertung erfolgt, der Zugriff auf die Hersteller-Datenbank (12) hat.

4. Verfahren nach Anspruch 3, **dadurch gekennzeichnet, dass** der Zugriff auf die Hersteller-Datenbank (12) mittelbar über einen an das WAN (6) angeschlossenen Schwacke®-Server (16) erfolgt.

5. Verfahren nach Anspruch 3 oder 4, **dadurch gekennzeichnet, dass** der Server (16) des Anbieters zur Fahrzeugbewertung mittelbar über einen an das WAN (6) angeschlossenen Server (14) eines Herstellers des zu verkaufenden Kraftfahrzeugs erfolgt, der Zugriff auf die Hersteller-Datenbank (12) hat.

6. Verfahren nach einem der Ansprüche 1 bis 5, **dadurch gekennzeichnet, dass** die empfangenen Daten aus der Hersteller-Datenbank (12) für das Kraftfahrzeug, dessen VIN an die Hersteller-Datenbank (12) übermittelt wurde, eine bei Auslieferung des Kraftfahrzeugs theoretisch maximal mögliche fahrzeugspezifische Ausstattung des Kraftfahrzeugs umfassen.

7. Verfahren nach einem der Ansprüche 1 bis 6, **dadurch gekennzeichnet, dass** die bei Auslieferung des Kraftfahrzeugs werksseitig vorhandene Ausstattung des Kraftfahrzeugs und/oder die bei Auslieferung des Kraftfahrzeugs theoretisch maximal mögliche fahrzeugspezifische Ausstattung des Kraftfahrzeugs anhand von herstellerseitig vorgegebenen Bezeichnungen und/oder Ausstattungscodes der Ausstattung in der Kraftfahrzeug-Datenbank (4) abgespeichert wird.

8. Verfahren zur dynamischen Generierung einer Suchmaske zur Online-Kraftfahrzeugsuche mittels eines an ein Wide-Area-Netzwerk (6), nachfolgend WAN, angebundenen Clients (18), wobei das Verfahren auf einem an das WAN (6) angebundenen Server (2) ausgeführt wird, mit folgenden Verfahrensschritten:
Empfangen (60) einer Suchanfrage nach einem gesuchten Kraftfahrzeug von dem Client (18) über das WAN (6), die Suchanfrage umfassend mindestens einen Herstellernamen und einen Modellnamen des gesuchten Kraftfahrzeugs,
Zugreifen (62) auf eine Kraftfahrzeug-Datenbank (4), in der eine Kombination von Informationen umfassend mindestens eine Fahrzeug-Identifizierungsnummer, nachfolgend VIN, Herstellernamen und Modellnamen von Kraftfahrzeugen und von Daten umfassend eine bei Auslieferung der Kraftfahrzeuge werksseitig vorhandene Ausstattung der Kraftfahrzeuge und bei Auslieferung des Kraftfahrzeugs theoretisch maximal mögliche fahrzeugspezifische Ausstattung der Kraftfahrzeuge abgespeichert sind,
Ermitteln von Kraftfahrzeugen aus der Kraftfahrzeug-Datenbank (4), welche der Suchanfrage entsprechen,
Generieren (66) der Suchmaske auf Grundlage der kombinierten Informationen und Daten für die ermittelten Kraftfahrzeuge aus der Kraftfahrzeug-Datenbank (4) sowie anhand der bei Auslieferung der ermittelten Kraftfahrzeuge theoretisch maximal möglichen fahrzeugspezifischen Ausstattung der ermittelten Kraftfahrzeuge, und
Übermitteln (68) der generierten Suchmaske an den Client (18) über das WAN (6) für weitere Filteroptionen durch einen Nutzer des Clients.

9. Verfahren nach Anspruch 8, **dadurch gekennzeichnet, dass** der Zugriff auf die Kraftfahrzeug-Datenbank (4) mittelbar über den Server (2) erfolgt.
